# EUROPEAN PATENT APPLICATION

(11) **EP 2 388 241 A2**
(43) Date of publication of application: **23.11.2011**
(21) Application number: 10731382.7
(22) Date of filing: 14.01.2010
(51) Int. Cl.: C04B 26/02, C04B 24/24

(54) **ARTIFICIAL CHIP HAVING TEXTURE OF NATURAL GRANITE AND ARTIFICIAL MARBLE INCLUDING SAME**

(30) Priority: 16.01.2009 KR 20090003859
(71) Applicant: LG Hausys, Ltd., Youngdungpo-gu Seoul 150-721 (KR)
(72) Inventor: KIM, Hang Young, Cheongju-si Chungcheongbuk-do 361-302 (KR); OH, Jae Ho, Sungnam-si Gyeoggi-do 463-020 (KR)
(74) Representative: Plougmann & Vingtoft A/S
(86) International application number: PCT/KR2010/000227
(87) International publication number: WO 2010/082767

(57) **Abstract**

The present invention relates to an artificial chip having the texture of natural granite that includes 80 to 95 parts by weight of a core part and 5 to 20 parts by weight of a base resin, and an artificial marble including the same. According to the present invention, different colors and different sizes of cores are included in the artificial chip, and thus various colors can be simultaneously expressed in one chip, thereby preparing an artificial marble with the texture of natural granite.

## Description

### [Technical Field]

The present invention relates to an artificial chip having the texture of natural granite and an artificial marble prepared using the same. More particularly, the present invention relates to an artificial chip having the texture of natural granite and artificial marble including the same, in which the artificial chip is manufactured by mixing a core part of a transparent chip or a general chip with a base resin and forming artificial marble by mixing with a base resin.

### [Background Art]

Recently, artificial marble is widely used as an interior building material and is employed in various applications such as kitchen sinks, washbasins, wall materials in stores, and the like, due to excellent texture, aesthetics, processibility, and weather resistance.

Artificial marble collectively refers to artificial composites exhibiting the texture of natural marble manufactured by mixing natural stone powder or minerals with a resin component or cement and adding pigments and additives. The artificial marble is classified into acrylic materials, unsaturated polyester materials, and engineered stone materials.

In particular, acrylic artificial marble is used for various purposes due to transparency of resin and high-quality texture. Engineered stone artificial marble refers to artificial marble produced using natural stone powder, quartz, glass and aluminum as main ingredients and about 10% or less by weight of resin.

Recently, artificial marble exhibiting an appearance close to natural marble has increasingly attracted attention. Further, as conventional artificial marble having a solid color or small-sized chips does not meet consumer demand, there is a trend towards artificial marble including large-sized chips and various colors.

Particularly, since conventional artificial marble products have a solid color or simple appearance using only a few similar colors of chips, there is an urgent need for improvement in appearance.

For example, Korean Patent No. 505185 discloses a method of manufacturing artificial marble that reproduces the multicolor patterns of natural marble by repeating a process of forming a printing layer through alternately screen printing different colors of paint to one side of a glass board and hardening the printed layer a plurality of times. In the method, the printed layer is formed by screen printing and is then hardened at 150 to 200°C for 15 to 30 minutes.

Further, Korean Patent Laid-open Publication No. 2005-81298 discloses a process of manufacturing artificial marble, which includes forming a multicolor pattern-printed layer on a rear side of transparent glass using a pigment through silkscreen printing, drying the layer at 130 to 180°C for 10 to 20 minutes, and naturally drying the layer for 48 to 72 hours, wherein silkscreen printing is performed on the rear side of the transparent glass using a composition prepared by mixing 50 to 60 % by weight (wt%) of an acrylic resin as a binder, 10 to 15 wt% of cyclohexanone as a solvent, 15 to 20 wt% of a pigment, 10 to 20 wt% of a silane compound as a curing agent, and 0.01 to 0.02 wt% of a foaming agent.

However, these techniques are simply directed to printing a marble pattern on a glass plate and thus do not obtain satisfactory resemblance to natural marble.

Recently, although larger-sized chips than conventional chips having a size of 1 to 5 mm are used to provide natural marble texture to artificial marble, artificial marble prepared using such larger-sized chips has a significant different pattern from natural marble. Particularly, when only solid-colored chips are used, natural color of natural marble cannot be properly exhibited. That is, there are limitations in exhibiting the color of natural marble due to disparate colors between a base and chips.

As another conventional method of manufacturing artificial marble, in a method of manufacturing artificial acrylic marble, acrylic syrup is prepared and mixed and molded with different colors of small-sized chips together with fillers to obtain a texture close to that of natural marble. However, such artificial marble does not have proper natural marble texture. That is, there are limitations in exhibiting various colors and chips of natural marble. Particularly, the artificial marble has remarkable different appearances from natural marble in terms of, for example, shapes, colors, and sizes of the chips.

### [Disclosure]

### [Technical Problem]

One aspect of the present invention is to provide artificial marble having a texture of natural granite manufactured by forming an artificial chip board having the texture of natural granite using a core part and a base resin, crushing the board into artificial chips having the texture of natural granite that include different colors and sizes of chips, and mixing the artificial chips with a base resin into artificial marble exhibiting various colors in one chip.

Another aspect of the present invention is to provide an artificial chip and a method of manufacturing the same, in which a base resin is used in a smaller amount than 25 parts by weight used in a conventional artificial chip manufacturing method without using an inorganic filler or by minimizing use of the inorganic filler to be far less than about 40 parts by weight in the art.

### [Technical Solution]

In accordance with one aspect, the present invention provides an artificial chip having the texture of natural granite includes 80 to 95 parts by weight of a core part and 5 to 20 parts by weight of a base resin, and artificial marble including the same.

### [Advantageous Effects]

As such, according to exemplary embodiments of the invention, artificial marble includes core parts having different sizes in one chip to exhibit a variety of colors through one chip, thereby manufacturing artificial marble having the texture of natural granite.

Further, in manufacture of the artificial marble, the amount of artificial chips having the texture of natural granite is increased than the amount of base resin, so that the base resin serves as a pigment while preventing cracking of the artificial chips.

### [Description of Drawings]

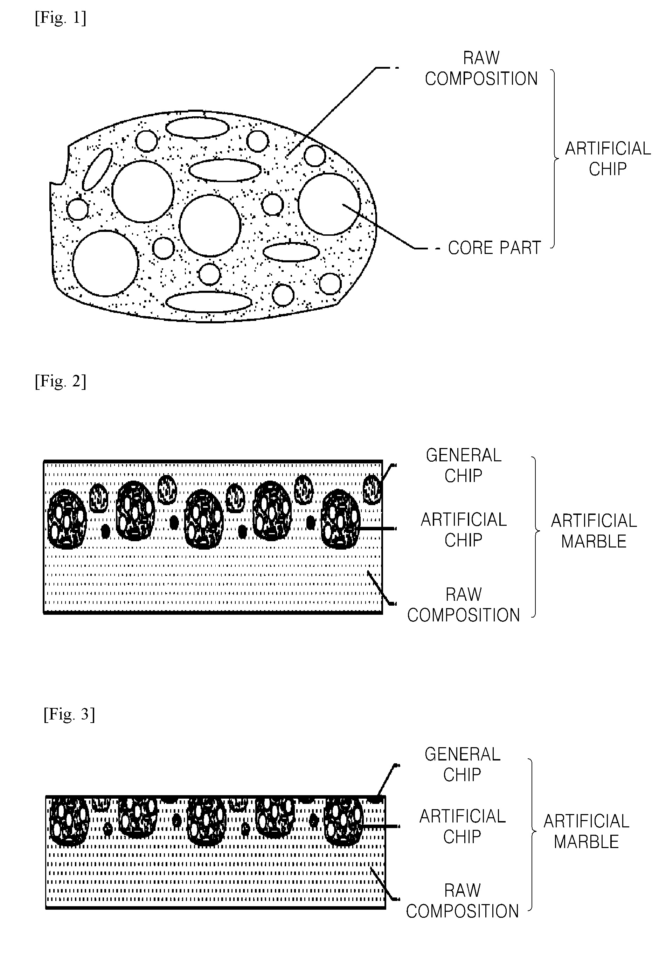

Fig. 1 is a configuration view of an artificial chip having the texture of natural granite in accordance with an exemplary embodiment of the present invention;
Fig. 2 is a configuration view of artificial marble having the texture of natural granite in accordance with an exemplary embodiment of the present invention;
Fig. 3 is a configuration view of artificial marble having the texture of natural granite via surface treatment in accordance with an exemplary embodiment of the present invention;
Fig. 4 is a photograph of artificial marble manufactured by a method in accordance with an exemplary embodiment of the present invention; and
Fig. 5 is an enlarged view of Circle A of Fig. 4.

### [Mode for Invention]

In one aspect of the invention, an artificial chip having the texture of natural granite includes 80 to 95 parts by weight of a core part and 5 to 20 parts by weight of a base resin.

In another aspect of the invention, a method of manufacturing an artificial chip having the texture of natural granite includes: (a) mixing 80 to 95 parts by weight of a core part with 5 to 20 parts by weight of a base resin slurry; (b) pressing, specifically heat pressing, the mixture into an artificial chip board having the texture of natural granite in a plate shape; and (c) crushing the artificial chip board having the texture of natural granite.

In a further aspect of the invention, artificial marble includes an artificial chip having the texture of natural granite.

In yet another aspect of the present invention, a method of manufacturing artificial marble includes: (a) mixing 80 to 95 parts by weight of an artificial chip having the texture of natural granite with 5 to 20 parts by weight of a base resin slurry; and (b) pressing, specifically heat pressing, the mixture into artificial marble having a plate shape.

An artificial chip having the texture of natural granite according to the invention is included in artificial marble to simulate the texture of natural granite and may include, without being limited to, 80 to 95 parts by weight of a core part and 5 to 20 parts by weight, preferably 13 to 18 parts by weight of a base resin.

Here, the artificial chip having the texture of natural granite has a specific gravity of 1.4 to 1.8, preferably 1.5 to 1.7.

The core part may be formed of any chip having various sizes and colors which is generally used to manufacture artificial marble in the art and include, without being limited to, a transparent chip, a general chip, or a mixture thereof.

Herein, the transparent chip means a resin chip having a total light transmittance of at least 80%. The general chip means a resin chip generally used to manufacture artificial marble or the like in the art, specifically opaque resin chips including at least one selected from the group consisting of acrylic resin, unsaturated polyester resins, epoxy resins, polyvinyl chloride, polystyrene, polycarbonate, polyethylene terephthalate, and a styrene-methyl methacrylate copolymer.

Here, the core part may have a size of 0.1 to 5 mm.

The base resin forming the artificial chip having the texture of natural granite may include, but is not limited thereto, at least one selected from the group consisting of acrylic resins, unsaturated polyester resins, epoxy resins, polyvinyl chloride, polystyrene, polycarbonate, polyethylene terephthalate, and styrene-methyl methacrylate copolymers.

In one embodiment, the base resin forming the artificial chip may further include 1 to 15 parts by weight of at least one material selected from the group consisting of pearl, a pigment, a curing agent, and additives.

Here, the pearl, the pigment, the curing agent, and the additive are not specifically limited and may include any material generally used to manufacture artificial marble in the art.

Here, examples of the additives may include at least one selected from silicone or non-silicone antifoaming agents; silane or titanate coupling agents including trimethoxy silane as a main component; phenyl salicylate, benzophenone, benzotriazole, nickel derivatives or radical inhibitor-type UV absorbers; halogen, phosphorus or inorganic metal frame retardants; stearic or silicone release agents; catechol and hydroquinone polymerization inhibitors; phenolic, amine, quinone, sulfur or phosphorus antioxidants; diacrylate cross-linkers; and mercaptan chain transfer agents.

In another embodiment, the base resin forming the artificial chip may further include 20 parts by weight or less, preferably 10 parts by weight or less, and more preferably 5 parts by weight or less of inorganic fillers.

Here, since the inorganic fillers are not necessarily included in the base resin, a minimum amount of inorganic fillers may be used. Proper examples of inorganic fillers may include calcium carbonate, aluminum hydroxide, silica, alumina, barium sulfate, magnesium hydroxide, or the like. Specifically, inorganic powder having a size of 1 to 100 µm may be used.

Next, a method of manufacturing such an artificial chip having the texture of natural granite will be described.

First, the artificial chip having the texture of natural granite is manufactured by mixing a core part and a base resin slurry, pressing the mixture into an artificial chip board, and crushing the board. In detail, the method includes: (a) mixing 80 to 95 parts by weight of the core part with 5 to 20 parts by weight of the base resin slurry; (b) pressing, specifically heat pressing the mixture into an artificial chip board having the texture of natural granite in a plate shape; and (c) crushing the artificial chip board having the texture of natural granite.

Here, the heat pressing means heat pressing and pressurizing at 80 to 150°C and a pressure of 20 to 80 Kgf/cm².

The artificial chip having the texture of natural granite manufactured through crushing the artificial chip board having the texture of natural granite may have a size of 1 to 15 mm. If the size of the artificial chip having the texture of natural granite is too large, a final product, i.e., artificial marble produced into a plate, has a limited thickness, cracks may be formed between the artificial chip and the base, and fluidity may be affected.

Here, when the size of the artificial chip is 15 mm or less, relatively small chips may be more advantageously used than relatively large chips. Further, in order to exhibit various patterns, artificial chips having various sizes are manufactured and then mixtures thereof may be used to manufacture artificial marble.

The core part forming the artificial chip having the texture of natural granite may be formed of any chip having various sizes and colors which is generally used to manufacture artificial marble in the art and include, without being limited to, a transparent chip, a general chip, or a mixture thereof.

Here, the transparent chip means a resin chip having a total light transmittance of at least 80 %. The general chip means a resin chip, which is generally used to manufacture artificial marble or the like in the art, specifically, opaque resin chips including at least one selected from the group consisting of acrylic resins, unsaturated polyester resins, epoxy resins, polyvinyl chloride, polystyrene, polycarbonate, polyethylene terephthalate, and styrene-methyl methacrylate copolymers.

Here, the core part may have a size of 0.1 to 5 mm.

The base resin slurry means a slurry-type composition including a monomer and/or a polymer of a base resin to manufacture an artificial chip having the texture of natural granite.

Here, the base resin may include at least one selected from the group consisting of acrylic resins, unsaturated polyester resins, epoxy resins, polyvinyl chloride, polystyrene, polycarbonate, polyethylene terephthalate, and styrene-methyl methacrylate copolymers, without being limited thereto.

In one embodiment, the base resin for forming the artificial chip may further include 1 to 15 parts by weight of at least one material selected from the group consisting of pearl, a pigment, a curing agent, and additives.

Here, the pearl, the pigment, the curing agent, and the additives are not specifically limited and may include any material generally used to manufacture artificial marble in the art.

Here, examples of the additives may include at least one selected from silicone or non-silicone antifoaming agents; silane or titanate coupling agents including trimethoxy silane as a main component; phenyl salicylate, benzophenone, benzotriazole, nickel derivatives or radical inhibiting UV absorbers; halogen, phosphorus or inorganic metal frame retardants; stearic or silicone release agents; catechol and hydroquinone polymerization inhibitors; phenolic, amine, quinone, sulfur or phosphorus antioxidants; diacrylate cross-linkers; and mercaptan chain transfer agents.

In another embodiment, the base resin may further include 20 parts by weight or less, preferably 10 parts by weight or less, and more preferably 5 parts by weight or less of inorganic fillers.

In a further embodiment, the base resin may be a slurry type base resin. In this case, the base resin slurry may include 100 parts by weight of a base resin syrup, 0 to 30 parts by weight of inorganic fillers, 0.2 to 5 parts by weight of a cross-linker, 0.2 to 3.0 parts by weight of a cross-linking accelerator, and 0.1 to 5 parts by weight of a pigment.

Here, the base resin, the inorganic filler, the cross-linker, the cross-linking accelerator, and the pigment, which form the base resin slurry, may be any material generally used in the art.

Specifically, the base resin syrup for the base resin slurry is resin syrup in which monomers of the base resin and polymers thereof are dissolved.

Further, the cross-linker may include multifunctional methacrylates, for example, ethylene glycol dimethacrylate, propylene glycol dimethacrylate, glycerol trimethacrylate, trimethylolpropane trimethacylate, and bisphenol-A dimethacrylate.

The artificial chip having the texture of natural granite manufactured by the above method is mixed with base resin slurry and pressed into artificial marble. In detail, a method of manufacturing artificial marble according to one embodiment includes: a) mixing 80 to 95 parts by weight of an artificial chip having the texture of natural granite with 5 to 20 parts by weight of a base resin slurry; and (b) pressing, specifically heat pressing the mixture into an artificial marble board having a plate shape.

Here, the artificial chip having the texture of natural granite may have a size of 0.5 to 1.5 mm, and the heat pressing means heat pressing and pressurizing at 80 to 150°C and a pressure of 20 to 80 Kgf/cm².

Further, in the mixing process (a) 5 to 15 parts by weight of a general chip may further be added as needed. Here, the general chip may have a size of 0.1 to 20 mm.

Here, the general chip means a resin chip generally used to manufacture artificial marble or the like in the art, specifically resin chips including at least one selected from the group consisting of acrylic resin, unsaturated polyester resins, epoxy resins, polyvinyl chloride, polystyrene, polycarbonate, polyethylene terephthalate, and a styrene-methyl methacrylate copolymer.

The base resin slurry means a slurry-type composition including a monomer and/or a polymer of a base resin to manufacture artificial marble.

Here, the base resin may include at least one selected from the group consisting of acrylic resin, unsaturated polyester resins, epoxy resins, polyvinyl chloride, polystyrene, polycarbonate, polyethylene terephthalate, and a styrene-methyl methacrylate copolymer, without being limited thereto.

In one embodiment, the base resin may further include 1 to 15 parts by weight of at least one material selected from the group consisting of pearl, a pigment, a curing agent, and additives.

Here, the pearl, the pigment, the curing agent, and the additive are not specifically limited and may include any material generally used to manufacture artificial marble in the art.

Here, examples of the additives may include at least one selected from silicone or non-silicone antifoaming agents; silane or titanate coupling agents including trimethoxy silane as a main component; phenyl salicylate, benzophenone, benzotriazole, nickel derivatives or radical inhibiting UV absorbers; halogen, phosphorus or inorganic metal frame retardants; stearic or silicone release agents; catechol and hydroquinone polymerization inhibitors; phenolic, amine, quinone, sulfur or phosphorus antioxidants; diacrylate cross-linkers; and mercaptan chain transfer agents.

In another embodiment, the base resin may further include 20 parts by weight or less, preferably 10 parts by weight or less, and more preferably 5 parts by weight or less of inorganic fillers.

In a further embodiment, the base resin may be a slurry type base resin. In this case, the base resin slurry may include 100 parts by weight of a base resin syrup, 0 to 30 parts by weight of inorganic fillers, 0.2 to 5 parts by weight of a cross-linker, 0.2 to 3.0 parts by weight of a cross-linking accelerator, and 0.1 to 5 parts by weight of a pigment.

Here, the base resin, the inorganic filler, the cross-linker, the cross-linking accelerator, and the pigment, which form the base resin slurry, may be any material generally used in the art.

Specifically, the base resin syrup for the base resin slurry is resin syrup in which monomers of the base resin and polymers thereof are dissolved.

Further, the cross-linker may include multifunctional methacrylates, for example, ethylene glycol dimethacrylate, propylene glycol dimethacrylate, glycerol trimethacrylate, trimethylolpropane trimethacylate, and bisphenol-A dimethacrylate.

Next, the present invention will be described in detail with reference to the following examples. These examples are provided for illustrative purposes only and are not to be in any way construed as limiting the present invention.

### Example 1

800 parts by weight of a chip (specific gravity: 1.64) as a core part formed of a transparent, crushed and cured halogenated epoxy material obtained by curing a mixture of epoxy resin (YDB 400, Kukdo Chemical Co., Ltd., Korea) and an amine curing agent (D-230, IPDA, Kukdo Chemical Co., Ltd., Korea) was mixed with a base resin containing 150 parts by weight of an acrylic resin, 6 parts by weight of pearl, 1 part by weight of tert-butyl perbenzoate (TBPB, Luperox P, ATOFINA) as a curing agent, and 5 parts by weight of additives of a diacrylate cross-linker (SR-231, Satomer) and a mercaptan chain transfer agent (normal dodecyl mercaptan, Chemos, Germany).

The mixture was heat-pressed at 100°C and at about 70 Kgf/m² to prepare an artificial chip board having the texture of natural granite in a plate shape.

Then, the artificial chip board was crushed into chips having a diameter of 0.5 to 15 mm using a hammermill-type crusher, thereby manufacturing an artificial chip having the texture of natural granite.

### Example 2

800 parts by weight of the artificial chip having the texture of natural granite prepared in Example 1 was mixed with a base resin containing 150 parts by weight of an acrylic resin, 6 parts by weight of pearl, 1 part by weight of a curing agent, and 5 parts by weight of additives.

Then, the mixture was heat-pressed at 100°C and at about 50 Kgf/m² to manufacture artificial marble in a plate shape.

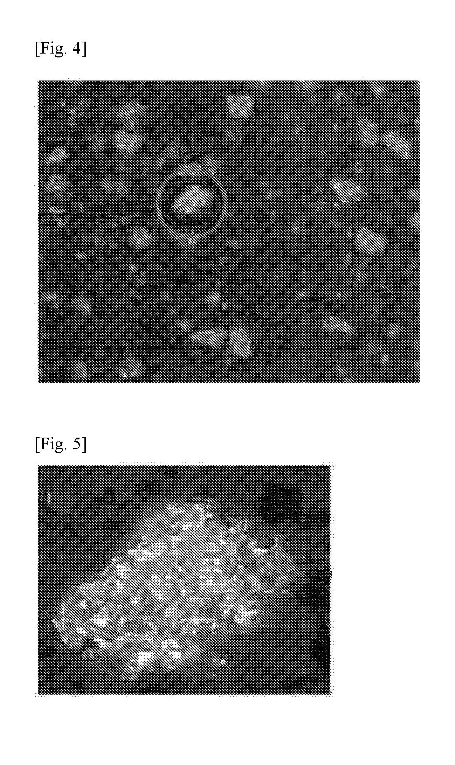

Results are shown in Figs. 4 and 5.

Although some embodiments have been described herein, it should be understood by those skilled in the art that these embodiments are given by way of illustration only, and that various modifications, variations, and alterations can be made without departing from the spirit and scope of the invention. Therefore, the scope of the invention should be limited only by the accompanying claims and equivalents thereof.

## Claims

1. An artificial chip having a texture of natural granite comprising: 80 to 95 parts by weight of a core part; and 5 to 20 parts by weight of a base resin.

2. The artificial chip of claim 1, wherein the base resin further comprises 1 to 15 parts by weight of at least one material selected from the group consisting of pearl, a pigment, a curing agent, and additives.

3. The artificial chip of claim 1, wherein the artificial chip has a specific gravity of 1.4 to 1.8.

4. The artificial chip of claim 1, wherein the core part is a transparent chip, a general chip, or a mixture thereof.

5. The artificial chip of claim 1, wherein the base resin comprises at least one selected from the group consisting of acrylic resins, unsaturated polyester resins, epoxy resins, polyvinyl chloride, polystyrene, polycarbonate, polyethylene terephthalate, and styrene-methyl methacrylate copolymers.

6. The artificial chip of claim 1, wherein the base resin further comprises 20 parts by weight or less of inorganic fillers.

7. The artificial chip of claims 2, wherein the additives comprise at least one selected from an antifoaming agent, a coupling agent, a UV absorber, a flame retardant, a release agent, a polymerization inhibitor, an antioxidant, a cross-linker, and a chain transfer agent.

8. A method of manufacturing an artificial chip having a texture of natural granite, comprising:
(a) mixing 80 to 95 parts by weight of a core part with 5 to 20 parts by weight of a base resin slurry;
(b) pressing the mixture into an artificial plate-shaped chip board having the texture of natural granite; and
(c) crushing the artificial chip board having the texture of natural granite.

9. The method of claim 8, wherein the base resin slurry further comprises 1 to 15 parts by weight of at least one material selected from the group consisting of pearl, a pigment, a curing agent, and additives.

10. The method of claim 8, wherein the artificial chip has a specific gravity of 1.4 to 1.8.

11. The method of claim 8, wherein the core part is a transparent chip, a general chip, or a mixture thereof.

12. The method of claim 8, wherein the base resin slurry comprises at least one selected from the group consisting of acrylic resins, unsaturated polyester resins, epoxy resins, polyvinyl chloride, polystyrene, polycarbonate, polyethylene terephthalate, and styrene-methyl methacrylate copolymers.

13. The method of claim 8, wherein the base resin slurry further comprises 20 parts by weight or less of inorganic fillers.

14. Artificial marble comprising the artificial chip having a texture of natural granite of any one of claims 1 to 7.

15. The artificial marble of claim 14, wherein the artificial marble further comprises 5 to 15 parts by weight of a general chip.

16. A method of manufacturing artificial marble, comprising:
(a) mixing 80 to 95 parts by weight of the artificial chip having the texture of natural granite of any one of claims 1 to 7 with 5 to 20 parts by weight of a base resin slurry; and
(b) pressing the mixture into artificial plate-shaped marble.

17. The method of claim 16, wherein 5 to 15 parts by weight of a general chip is further added during the mixing.

18. The method of claim 16, wherein the base resin slurry further comprises 1 to 15 parts by weight of at least one material selected from the group consisting of pearl, a pigment, a curing agent, and additives.

19. The method of claim 16, wherein the base resin slurry comprises 100 parts by weight of a base resin syrup, 0 to 30 parts by weight of inorganic fillers, 0.2 to 5 parts by weight of a cross-linker, 0.2 to 3.0 parts by weight of a cross-linking accelerator, and 0.1 to 5 parts by weight of a pigment.

20. The method of claim 18 or 19, wherein the base resin slurry comprises at least one selected from the group consisting of acrylic resins, unsaturated polyester resins, epoxy resins, polyvinyl chloride, polystyrene, polycarbonate, polyethylene terephthalate, and styrene-methyl methacrylate copolymers.
